Europäisches Patentamt

European Patent Office

Office européen des brevets

(11) Publication number: **0 101 435**
**B1**

# (12) EUROPEAN PATENT SPECIFICATION

(45) Date of publication of patent specification: **05.11.86**

(51) Int. Cl.⁴: **F 16 L 11/02**

(21) Application number: **82900667.5**

(22) Date of filing: **18.02.82**

(86) International application number:
**PCT/NO82/00008**

(87) International publication number:
**WO 83/02989 01.09.83 Gazette 83/20**

(54) **CONTINUOUSLY PRODUCED INFLATABLE HOSE INCLUDING THE METHOD OF PRODUCING SAME.**

(43) Date of publication of application:
**29.02.84 Bulletin 84/09**

(45) Publication of the grant of the patent:
**05.11.86 Bulletin 86/45**

(84) Designated Contracting States:
**AT BE DE FR GB NL SE**

(56) References cited:
**GB-A-1 326 544**
**US-A- 651 425**
**US-A-1 469 519**
**US-A-2 424 315**
**US-A-2 468 493**
**US-A-2 580 665**

(73) Proprietor: **Heger Plastics A/S**
**N-3660 Rjukan (NO)**

(72) Inventor: **KJORHOLT, Sigurd**
**Krystallvn. 16**
**N-3920 Eidanger (NO)**
Inventor: **JAHNSEN, Thor Helge**
**Holtevegen**
**N-3710 Siljan (NO)**

(74) Representative: **Wilhelms, Rolf E., Dr. et al**
**WILHELMS, KILIAN & PARTNER Patentanwälte**
**Eduard-Schmid-Strasse 2**
**D-8000 München 90 (DE)**

Courier Press, Leamington Spa, England.

## Description

The present invention concerns an inflatable hose for the transport of gas and fluids, including the method of producing same.

The invention also concerns the production of hoses for garden and hobby purposes, where special demands are made on the design and dimension of the hose.

Hoses of the above mentioned type must by definition have the following qualities:

They must be light, they must fit standard hose couplings, they must resist common pressures from the public water pipes and they must be easy to put away. In connection with paint spraying, pump drive etc. the hoses must resist the most common pressures generated by hobby appliances. In other words, a hose for the above purposes must resist all pressures between 0—10 ato. (0—980665 Pa).

In order to meet the above mentioned demands, the hoses must have comparatively thin walls. This has the effect that an upper limit must be set for the wall thickness compared to the external diameter of the hose.

Therefore the invention concerns the production of a special type of thin-walled hoses, where the hose thickness (1) constitutes from 1 to 10% of the external diameter (D) of the hose, when the hose is completely outstretched.

In order to facilitate the putting away of the hose, it must be designed in such a way that it is oriented longitudinally. This can be done by building a memory in the hose wall that directs the hose when it is being wound up.

Previously known hoses with extremely thin walls are fitted with an outer textile hose and an inner hose of another dense material. The inner hose can either be loose, NO—A—132.770, or be fixed to the outer wall.

Hoses produced in the above mentioned manner are comparatively expensive, as they must be joined, for instance by sewing. Besides, if they are to be fitted with a loose inner hose, this must be passed into them. Accordingly, it is impossible to produce the hoses continuously if the above mentioned method is used.

It is known from US—A—2.424.315 to produce thin-walled hoses.

It is described a hose and a method for producing the same, where two textile layers that are coated on one side are continuously passed together and with the coated sides against each other into the lamination unit, in such a way that the textile layers overlap only partly during the prelamination. When the prelamination is finished, an unlaminated part consisting of one textile layer with coating will protrude on each side of the laminate. In the next stage of the process the laminate is bent 180° from one side and then 180° from the other, so that the before mentioned unlaminated protruding parts of the laminate overlap completely with the coated sides against each other and the selvages against the selvages in the various textile layers. In other words, two butt and butt joints are formed in the hose wall a little to the side of each other, but on the same half of the hose between the bending zones of the hose.

Finally, the unlaminated part of the hose laminate is joined in a combined press and heat process.

When put to use, it proves to be of decisive importance to the mechanical properties of the hose that the overlapping part of the textile layers in the joint zone is as big as possible. As a general rule we could say that the smaller this is, the less durable is the hose as such. This shall be explained:

If the two textile layers are placed butt and butt with the joints directly over each other, the tensile forces of the hose wall cannot exceed the tensile stress of the coating itself. If the hose bursts, it bursts over the joint.

However, if the textile layers are made to overlap a bit, as shown in the said US—A—2.424.315, the tensile stress of the hose wall will be between the measured shearing stress of the laminate and its tensile stress. As the shearing forces of the overlapping part are proportional to the laminated surface in the overlapping zone, the strength of the hose wall will increase in relation to the size of the laminated, overlapping part of the hose wall. In other words, it is possible to increase the strength of the hose wall by increasing the overlapping zone. Therefore the overlapping zone can be adjusted so that it constitutes between 0.1—50.0% of the external circumference of the hose. The US-patent shows a hose which overlaps by 17% between the joints. For obvious reasons the overlapping zone cannot constitute more than 50% of the external circumference of the hose.

If, according to the method of producing the hose in the said US—A—2.424.315, we try to increase the overlapping part so that it overlaps by 50%, we will find that the joints will remain in the middle of the bending zone of the hose. Furthermore, we will find that the two butt and butt joints in the hose wall become two joints where the selvages are not butt and butt but parallel over each other. The selvages do not meet end to end, and accordingly the hose will be weaker.

Therefore the object of the present invention has been to produce a hose with the above mentioned qualities and where at the same time the joints remain diametrically against each other each on one half of the hose between the bending zones of the hose, i.e. with an overlap of 50% between the textile layers.

According to the invention this has been achieved by not prelaminating the textiles layers before the textile layers are passed into a folding device. The reason for this is to enable the textile layers to move freely in relation to each other and thereby to slide over each other until they meet butt and butt in the folding device. Then the textile layers are flattened and passed continuously into a press and lamination unit under the influence of pressure and heat in such a way that the joints remain each on one half of the hose between the bending zones of the hose.

When the textile layers are joined, the textile fibres are also exposed to molecular structural changes, which causes the textile molecules to orient in a new manner. Accordingly, at least two opposite sets are formed in the hose wall, and this has the effect that the hose folds up when it is not outstretched. In other words, the sets in the hose wall impose a flattened shape on the hose when it is uninflated. This makes the hose easy to wind up and furthermore, it prevents it from twisting when it is wound on to the reel.

It should be emphasized that in the present invention it is distinguished between the terms folding and bending, as bending means bending an even surface so that a sharp angle is formed in the bending zone, whereas folding means folding an even surface in such a way that it assumes the shape of for instance a cylinder.

The invention is as stated in the claims.

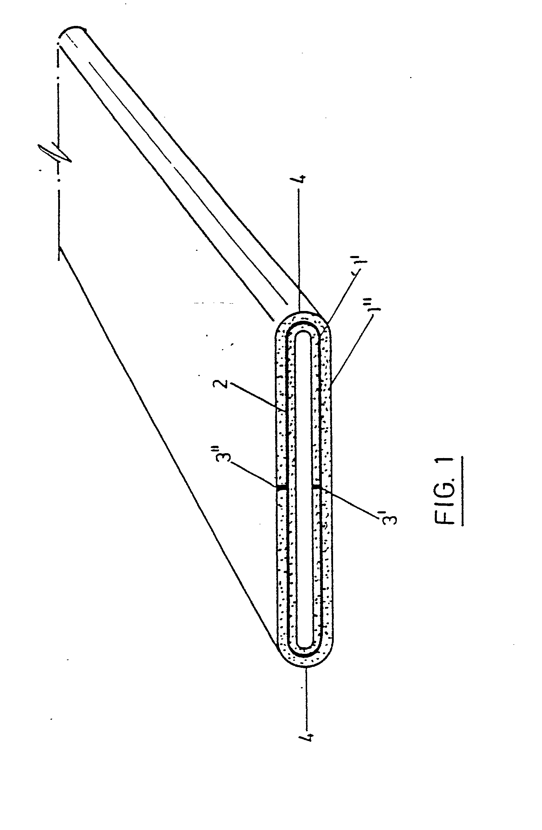

For further explanation of the reel reference is made to Fig. 1, that shows a preferred design of this when two textile ribbons that are coated on one side are used, and where the ribbons are folded around each other and where the overlap constitutes 50% of the circumference of the hose.

In Fig. 1 the textile ribbons that are coated on one side are indicated by (1' and 1'') and the coating by (2). The butt and butt joints are indicated by (3' and 3'') and the sets in the bending zone of the hose by (4).

Usually the textile is of a non-rotting material like polyamide and polyester, or a fungicide or germicide is added, for instance Sanitized®, if the material is of cotton, linen or other natural fibres.

In order to prevent the hose from stretching, at least some of the threads of the textile must be oriented in the longitudinal direction of the hose. This is achieved by weaving the threads 90° in relation to each other, i.e. 50% of the threads are placed lengthwise and 50% are placed 90° crosswise in the longitudinal direction of the hose.

The threads of the textile ribbon can either be twisted or not. Usually twisted threads are used. The thread weight will normally be between 20—150 deniers (2,22—16,66 tex).

The textile ribbons can be coated on one or both sides. Usually a coating for the said purpose will be on the basis of polyurethan, but polyvinylacetate, polyvinylchloride or another thermoplastic or thermosetting material can also be used for the purpose. The reason for this is that the coating must be diffusionproof and be adhesive when it is heated.

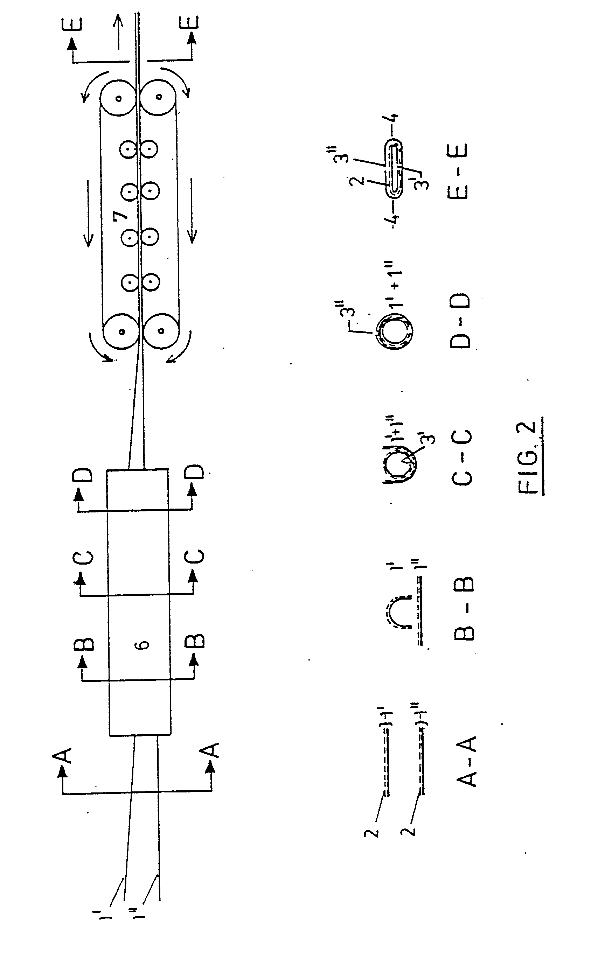

Fig. 2 shows the production of ribbons of the same type as those described according to Fig. 1.

The ribbons that are coated on one side (1' and 1'') are passed together into a guide unit (6), where the textile layers are folded one on top of the other.

At the end of the guide unit (6) the folded ribbons are flattened in a heated press section (7), whereby the ribbons are laminated (glued together).

In the following the actual method of producing the preferred design, Fig. 1, will be described:

Two textile ribbons (1' and 1'') of 6-polyamid and coated on one side (2) with polyurethan are passed continuously together into a guide unit (6). See Section A—A, Fig. 2.

The feeding of the ribbons is done in a known manner by pulling the ribbons through the folding device. The ribbon that is to form the inner layer (1') is folded from the top in such a way that it is shaped like a reversed U, thus ∩. See section B—B, Fig. 2. Then the outer ribbon (1'') is folded around this from below, so that this also is shaped like an open U, thus U. During the last mentioned folding of the outer ribbon (1'') the inner ribbon (1') is closed in a butt and butt joint (3'). See section C—C, Fig. 2.

Then the outer layer (1'') if folded over the inner layer (1'), whereafter the folding of the outer ribbon (1'') is finished in a butt and butt joint (3''). See section D—D, Fig. 2.

When the ribbons have been folded and are shaped like a non-glued or laminated tube, they are finally passed into a heated press device (7), so that the butt and butt joints (3' and 3'') remain halfway between the sets (4), as shown in Fig. 1 and also shown by means of Section E—E, Fig. 2.

During the lamination of the textile layers two opposite sets (4) are formed in the bending zones of the hose wall. These impose a flattened shape on the hose when it is uninflated.

The actual lamination can be done by means of heated press elements, by means of supersonic technique, by means of high-frequency technique or by means of another device that is suitable for the lamination. Fig. 2 shows a press device (7) where the folded ribbons (1' and 1'') are squeezed between two parallel metal press ribbons. These can be heated in a known manner.

Hoses that are produced according to the above description have, when being tried out, proved to be very well suited for the purpose. Another feature of such hoses is that they are easily mended when they have been perforated. The repairs are done most easily by ironing the hose with a hot iron, whereby the perforation is made impervious.

**Claims**

1. Inflatable hose for transport of gas and fluids, where the wall thickness of the hose (1) is from 1 to 10% of the external diameter (D) of the hose, where the hose is composed of at least two longitudinally extending textile ribbons (1', 1'') that are coated on one or both sides with a heat and pressure sensitive material (2) that brings about a joining of the textile ribbons in the zone where they overlap and whereby the edges of each textile ribbon meet in a respective butt joint (3', 3''), characterized in that the hose wall is provided with two diametrically opposed permanent sets (4) which impose a flattened shape on the hose when it is uninflated and in that said butt joints (3', 3'') are located diametrically opposite each other on respective halves of the hose wall between said permanent sets (4).

2. Method of producing inflatable hose with qualities according to claim 1, characterized in that at least two textile ribbons (1' 1'') that are coated on one or both sides are folded continuously around their respective axes in the longitudinal direction of the ribbons and in such a way that one ribbon (1'') completely surrounds the other ribbon (1') and that the edges of each ribbon meet in respective butt joints (3', 3''), whereafter the textile ribbons are joined by means of pressure and heat, whereby diametrically opposed permanent sets (4) are formed in the hose wall during the joining process.

## Patentansprüche

1. Aufblasbarer Schlauch zum Transport von Gas und Fluiden, wobei die Wanddicke des Schlauchs (1) von 1 bis 10% des äußeren Durchmessers (D) des Schlauches beträgt, wobei der Schlauch aus mindestens zwei sich in Längsrichtung erstreckenden Textilbändern (1', 1'') zusammengesetzt ist, die auf einer oder beiden Seiten mit einem hitze- und druckempfindlichen Material (2) beschichtet sind, wodurch eine Verbindung der Textilbänder in dem Bereich erfolgt, in dem sie überlappen, und wobei die Kanten jeden Textilbandes jeweils eine stumpfe Anlage (3', 3'') bilden, dadurch gekennzeichnet, daß die Schlauchwand mit zwei diametral gegenüberliegenden bleibenden Verformungen (4) versehen ist, die die flache Form des Schlauches bewirken, wenn dieser nicht aufgeblasen ist, und daß die stumpfen Anstöße (3', 3'') einander diametral gegenüber auf den jeweiligen Hälften der Schlauchwand zwischen den bleibenden Verformungen (4) angeordnet sind.

2. Verfahren zur Herstellung von aufblasbaren Schläuchen mit Eigenschaften gemäß Anspruch 1, dadurch gekennzeichnet, daß mindestens zwei Textilbänder (1'/1''), die auf einer oder beiden Seiten beschichtet sind, kontinuierlich um ihre jeweiligen Achsen in Längsrichtung der Bänder derart gefaltet werden, daß ein Band (1'') vollständig das andere Band (1') umgibt, und daß die Kanten von jedem Band in einzelnen stumpfen Anstößen (3', 3'') zusammentreffen, worauf die Bänder durch Druck und Hitze miteinander verbunden werden, wobei diametral gegenüberliegende bleibende Verformungen (4) in der Schlauchwand während des Verbindungsprozesses gebildet werden.

## Revendications

1. Tuyau gonflable pour le transport des gaz et fluides, dans lequel l'épaisseur de paroi du tuyau (1) représente de 1 à 10% du diamètre extérieur (D) du tuyau, dans lequel le tuyau est composé d'au moins deux rubans textiles (1', 1'') s'étendant longitudinalement, qui sont enduits sur une ou chacune des deux faces avec une matière (2) sensible à la chaleur et à la pression qui provoque la jonction des rubans textiles dans la zone dans laquelle ils se recouvrent, et de telle manière que les bords de chaque ruban textile se rejoignent en un joint bord à bord (3', 3''), caractérisé en ce que la paroi du tuyau est munie de deux plis permanents (4) diamétralement opposés qui imposent au tuyau une forme aplatie lorsqu'il est dégonflé et en ce que lesdits joints bord à bord (3', 3'') sont disposés dans des positions diamétralement opposées sur les moitiés respectives de la paroi du tuyau entre lesdits plis permanents (4).

2. Procédé pour fabriquer un tuyau gonflable possédant les qualités selon la revendication 1, caractérisé en ce qu'au moins deux rubans textiles (1', 1'') qui sont enduits sur une ou chacan des deux faces sont recourbés en continu autour de leurs axes respectifs, dans la direction longitudinale des rubans et de telle manière qu'un ruban (1'') entoure entièrement l'autre ruban (1') et que les bords de chaque ruban se rejoignent respectivement en un joint bord à bord (3', 3''), après quoi les rubans textiles sont unis au moyen de chaleur et de pression de telle manière que des plis permanents (4) diamétralement opposés soient formés dans la paroi du tuyau pendant l'opération de jonction.

FIG. 1

A   B   C   D   E

1'
1"

6

7

A   B   C   D   E

2 }1'
2 }1"

A - A

1'
1"

B - B

1'+1"
3'
3"

C - C

3"
1' + 1"

D - D

2  3"
4 — —4
3'

E - E

FIG. 2